# FASCICULE DE BREVET EUROPEEN

(11) **EP 0 611 221 B1**
(45) Date de publication et mention de la délivrance du brevet: **06.05.1998**
(21) Numéro de dépôt: 94410006.4
(22) Date de dépôt: 08.02.1994
(51) Int. Cl.: G01D 5/24, G01P 15/125, G01L 9/00

(54) **Micro-capteur capacitif à faible capacité parasite et procédé de fabrication**
Kapazitiver Microsensor mit geringer Fremdkapazität und Herstellungsverfahren
Capacitive microsensor with low parasitic capacitance and manufacturing process

(30) Priorité: 10.02.1993 FR 9301742
(43) Date de publication de la demande: 17.08.1994
(73) Titulaire: SEXTANT AVIONIQUE S.A., 92366 Meudon la Forêt Cédex (FR)
(72) Inventeur: Legoux, Christophe, F-26000 Valence (FR); Presset, René, F-26800 Etoiles/Rhone (FR)
(74) Mandataire: de Beaumont, Michel

(56) Documents cités:
- EP-A- 0 059 488
- EP-A- 0 369 352
- EP-A- 0 376 631

## Description

La présente invention concerne le domaine des micro-capteurs capacitifs en silicium. De tels micro-capteurs peuvent par exemple constituer des capteurs de pression, des capteurs d'accélération...

Ces dernières années, se sont développés de nouveaux types de micro-capteurs en silicium, tirant partie des techniques de gravure du silicium développées dans le cadre de la fabrication des composants électroniques à semiconducteurs. Au début, de tels micro-capteurs étaient constitués de l'assemblage de plaquettes de silicium convenablement gravées et de lames minces de verre servant de boîtier étanche ou de plaques de séparation isolantes entre des plaquettes de silicium, ces lames de verre portant éventuellement divers motifs d'électrodes métalliques.

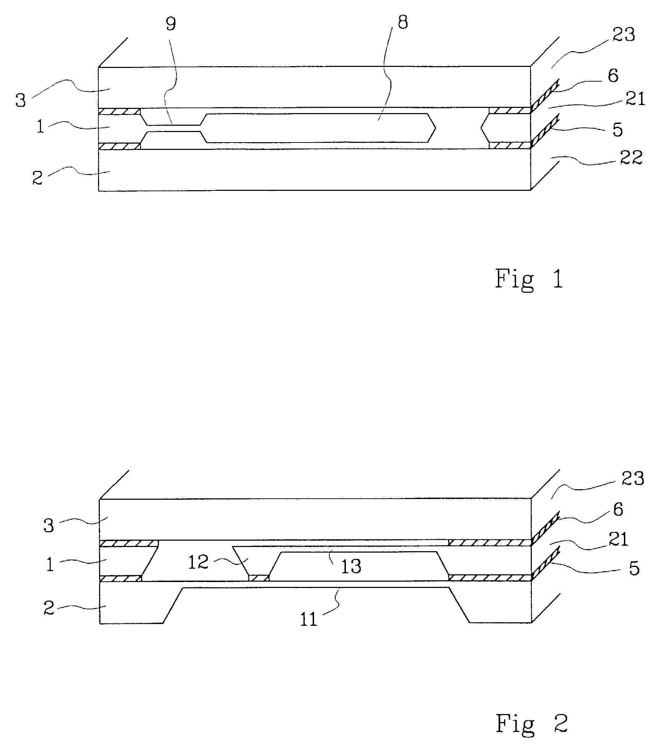

On tend actuellement à développer des micro-capteurs entièrement en silicium, sans plaque de verre jouant un rôle actif. Des exemples très schématiques de tels capteurs sont illustrés en figures 1 et 2.

Le capteur de la figure 1 est un capteur d'accélération et le capteur de la figure 2 un capteur de pression. Chacun de ces capteurs comprend une plaquette de silicium centrale 1 prise en sandwich entre des plaquettes de silicium externes 2 et 3. L'isolement entre les plaquettes est assuré par une première bande isolante 5, généralement une couche d'oxyde de silicium, entre les plaquettes 1 et 2 et une deuxième bande isolante 6 entre les plaquettes 1 et 3. Ces bandes isolantes prennent la forme d'un cadre disposé entre des plaquettes adjacentes, le long des bords de celles-ci. Des bandes d'oxyde peuvent être obtenues par croissance ou dépôt à partir de l'une des plaquettes adjacentes puis gravure. Une fois les trois plaquettes appliquées les unes contre les autres, une soudure est réalisée par un recuit à une température de 900 à 1100°C. Pour cela, la pratique montre qu'il convient que les surfaces de silicium et d'oxyde de silicium en regard aient de très faibles rugosités, par exemple inférieures à 0,5 nm. Les plaquettes de silicium extrêmes 2 et 3 définissent entre elles et avec la partie de cadre de la plaquette de silicium 1 une région dans laquelle est contenue une atmosphère contrôlée, par exemple une atmosphère à très faible pression, appelée vide.

La description précédente s'applique communément aux micro-capteurs des figures 1 et 2.

Dans le cas de la figure 1, qui représente schématiquement une vue en coupe d'un accéléromètre, la plaquette de silicium centrale 1 est gravée avant assemblage pour comprendre un cadre et une plaque centrale ou masselotte 8 fixée au cadre par des barres minces de suspension 9. Une seule barre apparaît dans la vue en coupe schématique de la figure 1. De façon classique, on utilisera des systèmes de suspension à deux ou quatre barres. Les plaquettes externes 2 et 3 délimitent avec le cadre formé à la périphérie de la plaquette centrale un espace vide. On détecte les variations de capacité entre la face supérieure de la masselotte et la plaquette de silicium 3 et éventuellement également entre la face inférieure de la masselotte et la plaquette inférieure 2. Quand le dispositif est soumis à une accélération, la masselotte 8 se déplace par rapport à l'ensemble du dispositif et les capacités susmentionnées varient. Il est également généralement prévu un asservissement électrostatique pour maintenir en place la masselotte par application d'un champ électrique continu et c'est alors le signal d'erreur qui donne une indication de la variation de capacité.

Des structures du type de celle de la figure 1 sont décrites plus en détail par exemple dans la demande de brevet EP-A-369 352.

La figure 2 représente très schématiquement une structure constituant un capteur de pression. La plaquette inférieure 2 est gravée pour y former une membrane mince 11. La plaquette 1 est gravée pour former un plot 12 appuyé sur cette membrane. Une lamelle de silicium 13 s'étend entre ce plot et le cadre de la plaquette 1. A nouveau, l'espace délimité par la plaquette supérieure, la plaquette inférieure et le cadre de la plaquette centrale définit un espace vide. Des variations de pression externe déforment la membrane 11 et font varier la tension de la lamelle 13. Cette variation de tension entraîne une variation de la fréquence de résonance du résonateur capacitif constitué par la lamelle 13 et la surface en regard de la plaquette 3. De préférence, la face interne de la plaquette 3 est gravée pour former une bande en saillie en face de la lamelle 13.

Dans le cas de la figure 1, des électrodes 21, 22 et 23 doivent être respectivement solidaires des plaquettes 1, 2 et 3. Dans le cas de la figure 2, seules les électrodes 21 et 23 seront nécessaires.

Ces structures de l'art antérieur, qu'elles utilisent directement une mesure de capacité ou une mesure de fréquence de résonance présentent l'inconvénient que ces mesures sont fortement affectées par la présence de capacités parasites élevées. Ces capacités parasites correspondent essentiellement aux capacités entre le cadre formé dans la plaquette 1 et les parties en regard de la plaquette supérieure et/ou inférieure, capacités dont le diélectrique est constitué par les couches d'isolant (oxyde de silicium) 5 et 6.

Ce problème des capacités parasites est clairement souligné dans la demande de brevet européen 369352 susmentionnée où il est indiqué (colonne 6, lignes 45 à 52) : "la capacité de la partie de liaison devient une capacité parasite... Ainsi, la capacité électrique à ce niveau doit être aussi faible que possible. Dans ce but, la surface de la partie de liaison doit être aussi petite que possible et les couches d'oxydation thermique... doivent être aussi épaisses que possibles".

Toutefois, un problème se pose puisque l'épaisseur du cadre 1 est dans un procédé de fabrication simple la même que l'épaisseur de la masselotte 8. Ainsi, l'épaisseur des couches isolantes (oxyde) 5 et 6 définit, d'une part, la valeur de l'intervalle entre la masselotte et chacune des faces en regard, d'autre part, l'isolement entre plaquettes de silicium. Cette épaisseur doit être faible pour que la capacité active (définie par l'intervalle entre la masselotte et les faces en regard) soit aussi grande que possible. De façon antinomique, cette épaisseur doit être aussi grande que possible pour limiter la capacité parasite.

Pour résoudre ce problème, la demande de brevet susmentionnée propose (comme cela est illustré dans sa figure 4 reprise dans la figure 3 ci-jointe) de déposer des couches de silicium polycristallin 16, 18 sur les faces internes des plaquettes externes, en regard de la masselotte, pour réduire l'intervalle entre la masselotte et les faces en regard. On peut ainsi dissocier les paramètres antinomiques susmentionnés. Toutefois, ce procédé est relativement complexe puisqu'il nécessite des étapes de fabrication supplémentaires comprenant un dépôt de silicium polycristallin et une gravure de celui-ci sur les faces internes. Une autre solution est proposée dans cette demande de brevet antérieure en relation avec sa figure figure 24. Elle consiste d'une part à rendre inégales l'épaisseur de la masselotte et l'épaisseur du cadre, d'autre part à creuser les faces externes et à les remplir d'un verre isolant aux endroits de contact. A nouveau, il s'agit là d'un procédé complexe et l'utilisation de dépôts de verre n'est pas sans inconvénients.

Ainsi, un objet de la présente invention est de prévoir une nouvelle structure de micro-capteur capacitif dans laquelle les capacités parasites sont réduites.

Un autre objet de la présente invention est de prévoir une telle structure dans laquelle on évite des variations de ces capacités d'un composant à un autre et au cours du temps.

Pour atteindre ces objets, la présente invention prévoit un micro-capteur capacitif comprenant un sandwich de trois plaquettes de silicium, bande périphérique de la face interne de chaque plaquette externe étant accolée à une bande correspondante de la face en regard de la plaquette centrale par l'intermédiaire d'une bande isolante. La bande isolante est une bande d'oxyde de silicium qui pénètre partiellement à l'intérieur des plaquettes externes.

Selon un mode de réalisation de la présente invention, la hauteur en saillie de la bande isolante est sensiblement la moitié de son épaisseur totale.

La présente invention prévoit aussi un procédé de fabrication du micro-capteur capacitif susmentionné qui consiste à assembler trois plaquettes de silicium séparées entre elles, au moins au niveau de leur pourtour, par une bande isolante, chacune de ces plaquettes faisant initialement partie d'une tranche de silicium, des dispositifs individuels étant formés par découpe de l'assemblage de tranches, dans lequel la bande isolante est formée par oxydation localisée des plaquettes externes.

La présente invention prévoit aussi un procédé de fabrication du micro-capteur capacitif susmentionné qui consiste à assembler trois plaquettes de silicium séparées entre elles, au moins au niveau de leur pourtour, par une bande isolante, chacune de ces plaquettes faisant initialement partie d'une tranche de silicium, des dispositifs individuels étant formés par découpe de l'assemblage de tranches, dans lequel la bande isolante est formée par creusement des régions appropriées des plaquettes externes, oxydation et gravure de l'oxyde en dehors des régions creusées.

Ces objets, caractéristiques et avantages ainsi que d'autres de la présente invention seront exposés en détail dans la description suivante de modes de réalisation particuliers faite en relation avec les figures jointes parmi lesquelles :
les figures 1 et 2 décrites précédemment sont des vues en coupe schématique d'un micro-capteur d'accélération et d'un micro-capteur de pression selon l'art antérieur ;
La figure 3 est une vue en coupe d'une variante de micro-capteur d'accélération selon l'art antérieur ;
la figure 4 représente une vue en coupe d'un micro-capteur d'accélération selon la présente invention ;
les figures 5A à 5E représentent en coupe des vues successives d'une tranche de silicium à partir de laquelle est formée une plaquette externe selon la présente invention, à des stades successifs de fabrication ;
la figure 6 représente une vue en coupe d'un mode de réalisation de la présente invention à une étape intermédiaire de fabrication ; et
la figure 7 représente une vue en coupe d'un mode de réalisation de la présente invention à une étape intermédiaire ultérieure de fabrication.

Dans les diverses vues en coupe, les épaisseurs ne sont pas tracées à l'échelle et sont arbitrairement dilatées pour rendre les figures lisibles. Par exemple, les épaisseurs des plaquettes de silicium sont de l'ordre de 300 à 500 micromètres tandis que les épaisseurs des couches d'isolant sont de l'ordre de 2 à 4 micromètres. Les dimensions latérales de chaque composant pourront être de l'ordre de 3 à 6 mm.

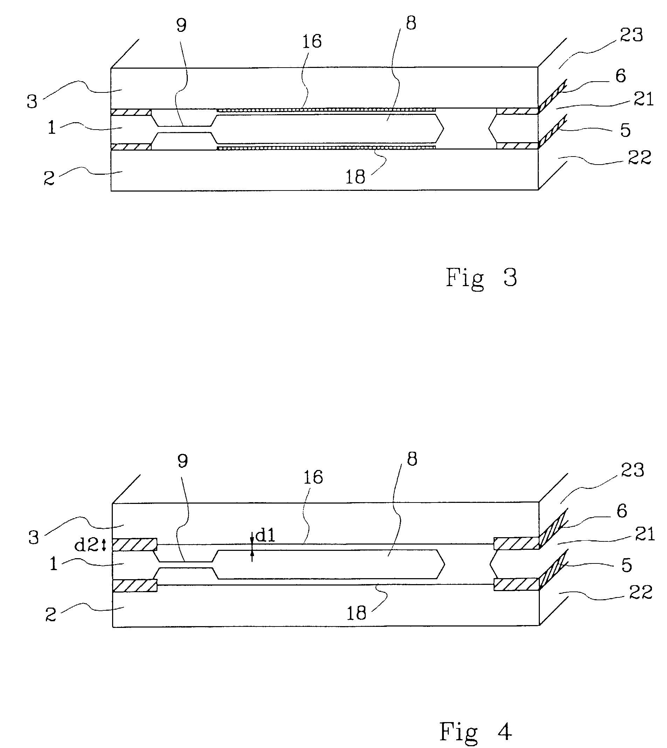

La figure 4 représente une vue en coupe d'un dispositif selon la présente invention. Les couches d'isolant destinées à séparer les plaquettes externes de la plaquette centrale sont des couches d'oxyde qui pénètrent partiellement dans les plaquettes externes et en font partiellement saillie. Ainsi, leur épaisseur en saillie d1 délimite l'intervalle entre la masselotte et les plaquettes externes tandis que leur épaisseur totale d2 détermine la valeur des capacités parasites. Il est donc ainsi possible de limiter la valeur des capacités parasites sans réduire la valeur de l'intervalle actif.

Une telle structure peut être fabriquée simplement par divers procédés classiques utilisant des couches d'oxyde de silicium.

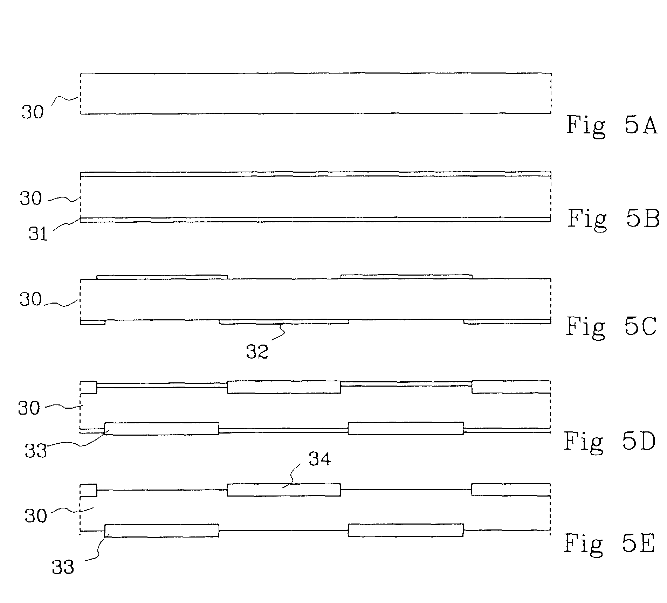

Les figures 5A à 5E représentent des étapes successives de fabrication utilisant le procédé classique désigné dans la technique des semiconducteurs sous l'appellation "LOCOS". Ces figures 5A à 5E représentent une tranche de silicium externe.

Dans un premier temps, on décrira seulement les opérations effectuées sur la face inférieure de cette tranche externe considérée comme étant une tranche supérieure.

La figure 5A représente une tranche nue 30.

A l'étape de la figure 5B, la face inférieure de cette tranche est revêtue d'une couche mince de nitrure de silicium 31. Classiquement, cette couche de nitrure de silicium a une épaisseur d'une centaine de nanomètres et est déposée sur une couche très mince d'oxyde de silicium d'une épaisseur d'une dizaine de nanomètres.

A l'étape de la figure 5C, la couche de nitrure de silicium 31 est gravée pour laisser en place des régions 32.

A l'étape de la figure 5D, une oxydation thermique est réalisée qui se produit seulement dans les ouvertures ménagées entre les régions 32. On obtient ainsi des régions d'oxyde 33 qui pénètrent d'une certaine profondeur dans la tranche de silicium et font saillie d'une hauteur déterminée.

Enfin, comme le représente la figure 5E, on procède à une gravure pour éliminer le nitrure de silicium. La gravure du nitrure de silicium peut être suivie d'une gravure de l'oxyde de silicium pour laisser en saillie seulement une hauteur choisie d'oxyde de silicium. Classiquement, la hauteur en saillie est sensiblement égale à la profondeur de pénétration. Ainsi, si la couche d'oxyde de silicium a une épaisseur totale de l'ordre de 2 micromètres, la hauteur en saillie sera de l'ordre de 1 micromètre ou moins. On peut envisager de faire croître des couches d'oxyde ayant des épaisseurs totales allant jusqu'à 3 à 4 micromètres.

Comme le représentent les figures 5A à 5E, en même temps que l'on forme les régions 33, on peut former sur la face supérieure de la tranche 30 des régions sensiblement complémentaires 34.

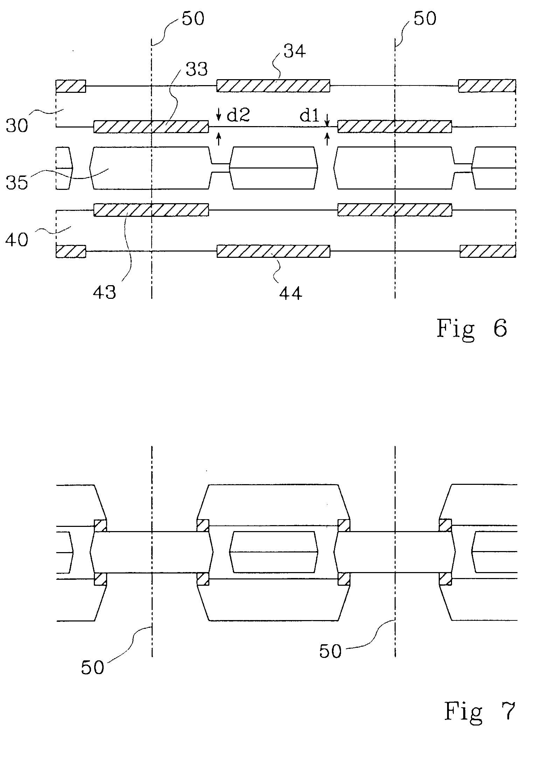

Comme le représente la figure 6, on peut ensuite assembler deux tranches externes telles que la tranche 30, respectivement désignées par les références 30 et 40 de part et d'autre d'une tranche centrale 35, la tranche 40 comprenant des régions d'oxyde 43 symétriques des régions d'oxyde 33. La tranche centrale a une structure classique connue dans la technique. L'ensemble est ensuite soudé par traitement thermique et l'on obtient bien le résultat souhaité, à savoir que l'épaisseur d2 de l'oxyde 33 contribuant à la définition des capacités parasites est plus élevée que l'intervalle d1 entre la masselotte et les tranches externes. Une fois la structure assemblée, on peut de façon classique diviser l'assemblage des trois tranches en composants élémentaires tels que celui de la figure 4 par sciage selon les lignes indiquées en pointillés par les références 50.

La figure 7 représente un autre mode de séparation en composants élémentaires. Selon cet autre mode de séparation, on utilise les régions 34 et 44 précédemment définies comme masque de gravure des plaquettes de silicium externes 30 et 40. Et l'on grave ces plaquettes jusqu'à atteindre les couches d'oxyde 33 et 43. C'est seulement après cette gravure des plaquettes externes que l'on réalise une séparation en composants élémentaires par sciage selon les lignes 50. Dans ce deuxième mode de réalisation de l'invention, comme dans le premier, on a l'avantage d'une augmentation de l'épaisseur de l'isolant de séparation entre plaquettes mais on a un avantage supplémentaire lié au fait que le sciage n'est pas effectué le long de la tranche du dispositif et n'est donc pas susceptible d'entraîner des copeaux de silicium au niveau des parois apparentes des bandes d'oxyde latérales.

Bien entendu, la présente invention est susceptible de nombreuses variantes qui apparaîtront à l'homme de l'art. Par exemple, au lieu d'utiliser le procédé "LOCOS" pour former les régions d'oxyde partiellement enterrées 33, on pourrait d'abord effectuer une gravure des tranches de silicium externes, en ménageant des creusements au niveau des régions 33, puis procéder à une oxydation uniforme et enlever l'oxyde de silicium par masquage en dehors des zones de creux. On obtient alors sensiblement le même résultat.

La présente invention est susceptible de nombreuses variantes et modifications qui apparaîtront à l'homme de l'art. Notamment, on a décrit un mode de réalisation de l'invention en relation avec un accéléromètre très schématique. De nombreuses autres structures d'accéléromètre sont connues dans la technique et l'on soulignera à nouveau que la présente invention s'applique également à des structures du type capteur de pression telle que celle illustrée en figure 2.

## Revendications

1. Micro-capteur capacitif comprenant un sandwich de trois plaquettes de silicium (1, 2, 3), une bande périphérique de la face interne de chaque plaquette externe étant accolée à une bande correspondante de la face en regard de la plaquette centrale par l'intermédiaire d'une bande isolante (5, 6), caractérisé en ce que ladite bande isolante est une bande d'oxyde de silicium qui pénètre partiellement à l'intérieur des plaquettes externes (2, 3).

2. Micro-capteur capacitif selon la revendication 1, caractérisé en ce que la hauteur en saillie (d1) de la bande isolante (5, 6) est sensiblement la moitié de son épaisseur totale (d2).

3. Procédé de fabrication d'un micro-capteur capacitif selon la revendication 1, consistant à assembler trois plaquettes de silicium séparées entre elles, au moins au niveau de leur pourtour, par une bande isolante (33, 43), chacune de ces plaquettes faisant initialement partie d'une tranche de silicium (30, 35, 40), des dispositifs individuels étant formés par découpe de l'assemblage de tranches, caractérisé en ce que ladite bande isolante (33, 43) est formée par oxydation localisée des plaquettes externes (30, 40).

4. Procédé de fabrication d'un micro-capteur capacitif selon la revendication 1, consistant à assembler trois plaquettes de silicium séparées entre elles, au moins au niveau de leur pourtour, par une bande isolante (33, 43), chacune de ces plaquettes faisant initialement partie d'une tranche de silicium (30, 35, 40), des dispositifs individuels étant formés par découpe de l'assemblage de tranches, caractérisé en ce que ladite bande isolante (33, 43) est formée par creusement des régions appropriées des plaquettes externes (30, 40), oxydation et gravure de l'oxyde en dehors des régions creusées.

## Patentansprüche

1. Kapazitiver Mikrosensor mit einem Sandwich aus drei Siliziumplatten (1, 2, 3), wobei ein Randstreifen der inneren Oberfläche jeder äußeren Platte mit einem entsprechenden Streifen der der zentralen Platte über einen Isolationsstreifen (5, 6) zugewandten Oberfläche gekoppelt ist, dadurch **gekennzeichnet**, daß der Isolationsstreifen ein Siliziumoxid-Streifen ist, der teilweise in das Innere der äußeren Platten (2, 3) eindringt.

2. Kapazitiver Mikrosensor nach Anspruch 1, dadurch **gekennzeichnet**, daß die vorstehende Höhe (dl) des Isolationsstreifens (5, 6) im wesentlichen die Hälfte seiner Gesamtdicke (d2) ausmacht.

3. Verfahren zum Herstellen des kapazitiven Mikrosensors nach Anspruch 1, bei dem drei Siliziumplatten zusammengesetzt werden, die wenigstens an ihrem Umfang durch einen Isolationsstreifen (33, 43) getrennt sind, wobei jede der Platten ursprünglich ein Teil einer Silizium-Wafer (30, 35, 40) ist und individuelle Einheiten Schneiden der Wafer-Anordnung gebildet werden, dadurch **gekennzeichnet**, daß der Isolationsstreifen (33, 43) durch lokalisiertes Oxidieren der äußeren Platten (30, 40) gebildet wird.

4. Verfahren zum Herstellen des kapazitiven Mikrosensors nach Anspruch 1, bei dem drei Siliziumplatten zusammengesetzt werden, die wenigstens an ihrem Umfang durch einen Isolationsstreifen (33, 43) getrennt sind, wobei jede der Platten ursprünglich ein Teil einer Silizium-Wafer (30, 35, 40) ist und individuelle Einheiten durch Schneiden der Wafer-Anordnung gebildet werden, wobei der Isolationsstreifen durch Aushöhlen geeigneter Gebiete der äußeren Platten (30, 40), Oxidation und Ätzen des Oxids außerhalb der ausgehöhlten Gebiete gebildet wird.

## Claims

1. A capacitive microsensor including a sandwich of three silicon plates (1, 2, 3), a peripheral stripe of the internal surface of each external plate being coupled to a corresponding stripe of the surface facing the central plate via an isolating stripe (5, 6), characterized in that the isolating stripe is a silicon oxide stripe which partially penetrates inside the external plates (2, 3).

2. The capacitive microsensor of claim 1, characterized in that the protruding height (dl) of the isolating stripe (5, 6) is substantially half its total thickness (d2).

3. A method of manufacturing of the capacitive microsensor of claim 1, consisting of assembling three silicon plates separated, at least at their circumference, by an isolating stripe (33, 43), each of the plates being initially a part of a silicon wafer (30, 35, 40), individual devices being formed by cutting of the wafer assembly, characterized in that the isolating stripe (33, 43) is formed by localized oxidation of the external plates (30, 40).

4. A method of manufacturing of the capacitive microsensor of claim 1, consisting of assembling three silicon plates separated, at least at their circumference, by an isolating stripe (33, 43), each of the plates being initially a part of a silicon wafer (30, 35, 40), individual devices being formed by cutting of the wafer assembly, wherein the isolating stripe (33, 43) is formed by hollowing appropriate regions of the external plates (30, 40), oxidizing, and etching of the oxide outside the hollowed regions.
